# EUROPEAN PATENT SPECIFICATION

(11) **EP 3 789 367 B1**
(45) Date of publication and mention of the grant of the patent: **17.05.2023**
(21) Application number: 20192695.3
(22) Date of filing: 25.08.2020
(51) Int. Cl.: C04B 41/00, B60L 5/24, C04B 41/45, C04B 41/88, C04B 41/51, C01B 32/05, B60L 5/20, C04B 35/626, C04B 35/80, C04B 35/76, C04B 35/52, C04B 35/83

(54) **METHOD OF PREPARING HIGH-CONDUCTIVITY PANTOGRAPH CARBON CONTACT STRIP**
VERFAHREN ZUR HERSTELLUNG EINES HOCHLEITFÄHIGEN KOHLENSTOFFKONTAKTSTREIFENS FÜR STROMABNEHMER
PROCÉDÉ DE PRÉPARATION D'UNE BANDE DE CONTACT DE CARBONE DE PANTOGRAPHE À HAUTE CONDUCTIVITÉ

(30) Priority: 27.08.2019 CN 201910793530
(43) Date of publication of application: 10.03.2021
(73) Proprietor: Southwest Jiaotong University, Chengdu, Sichuan 611756 (CN)
(72) Inventor: WU, Guangning, Chengdu, Sichuan 611756 (CN); WEI, Wenfu, Chengdu, Sichuan 611756 (CN); YANG, Zefeng, Chengdu, Sichuan 611756 (CN); GAO, Guoqiang, Chengdu, Sichuan 611756 (CN); ZUO, Haozi, Chengdu, Sichuan 611756 (CN); CHEN, Qichen, Chengdu, Sichuan 611756 (CN); LIAO, Qianhua, Chengdu, Sichuan 611756 (CN); XIE, Wenhan, Chengdu, Sichuan 611756 (CN); WANG, Hong, Chengdu, Sichuan 611756 (CN); XU, Zhilei, Chengdu, Sichuan 611756 (CN); LI, Xiang, Chengdu, Sichuan 611756 (CN)
(74) Representative: Ipside

(56) References cited:
- CN-A- 105 018 775
- CN-A- 108 994 300
- FR-A1- 2 838 390

## Description

### Technical Field

The present disclosure relates to the technical field of electric arc contact devices, and in particular to a method of preparing a high-conductivity pantograph carbon contact strip.

### Background of the Invention

Electrical carbon material is a carbon-graphite-based electrical material having a special function, which is used to manufacture parts and so on for stationary electrical contact or rotary electrical contact of an electrical device. For example, the material can be used to manufacture electrical brushes of motors, graphite contacts of electrical switches and relays, and pantographs and the like. Further, the material may also be used to manufacture graphite electrodes of arc discharge, carbon rods, carbon films and carbon resistors of spectrum analysis, carbon and graphite electric heating elements, carbon rods of dry batteries, and graphite anodes and graphite gates of large-scale electronic tubes and the like. Due to limitation of application scenarios, the electrical carbon materials are usually made to have excellent conductivity.

A system of pantograph and contact line is an important approach to supply energy to a train. In order to protect copper wires of the contact line, a well-lubricating carbon contact strip is generally adopted as a collector element on a pantograph of a train. To further improve the conductivity of the carbon contract strip, a method of immersing the carbon contact strip with copper metal liquid is often adopted. However, in an existing pantograph carbon contact strip, pores are not mutually communicated, carbon phase and copper phase are not mutually wetted, and copper metal liquid is difficult to uniformly diffuse in the pores of a preform of the carbon contact strip. As a result, the copper metal liquid immerses the carbon contact strip at a very low efficiency at present. Further, the immersed carbon contact strip is still low in conductivity, weak in mechanical strength and poor in arc ablation resistance.

Patent document FR 2 838 390 A describes an electrical rubbing contact for use with catenaries or third rails, comprises wearing block. The rubbing block includes a contact block resistive to abrasion within a sheath of high thermal conductivity. The block consists of a wearing block and support. Patent document CN 108 994 300 A discloses carbon/metal composite material with a microscopic orientation structure for electric contact and a preparation method thereof. The composite material is composed of 0.5%-60% of carbon materials and metal by volume percentage, the microscopic orientation structure is characterized in that the carbon materials are directionally arranged in a sheet layer form in a metal matrix, the carbon materials are one or more than one of graphene, carbon nano tubes and scaly graphite, and the metal is silver, copper or an alloy using the same as a matrix. Patent document CN 105 018 775 A discloses a preparation method of a graphite/copper composite material for slide electric conduction. The preparation method of the graphite/copper composite material for slide electric conduction uses copper powder and zirconium powder for preparing mixed powder to wrap a graphite block; and the graphite block is infiltrated in vacuum with high temperature in a crucible to obtain the graphite/copper composite material.

### Summary of the Invention

For the above prior art, the present disclosure provides a method of preparing a high-conductivity pantograph carbon contract strip so as to solve the problems of a low conductivity, a weak mechanical strength and a poor arc ablation resistance of a pantograph carbon contact strip.

For the above purpose, the present disclosure adopts the following steps of preparing a high-conductivity pantograph carbon contract strip:
(1) preparing a preform: obtaining a pantograph carbon contact strip preform with communication pores, which is exemplarily illustrated in the following two items:
   (a) a given amount of graphene and fiber is added into water to prepare a homogeneous and stable aqueous solution, then a metal base is pre-cooled in liquid nitrogen for a period of time, a container holding the aqueous solution is placed on the metal base for a period of time, the aqueous solution in the container performs ice crystal growth along a temperature gradient to force graphene and fiber to be arranged at a given orientation, embedded between ice crystal columns and gradually cured so as to obtain a carbon framework with a given shape, and then the carbon framework is lyophilized using a lyophilizer for a period of time to realize ice crystal sublimation;
   (b) a carbon contact strip aggregate containing a pore-forming agent is pre-pressed into a carbon-based column, the carbon-based column is then heated to 70-85°C, held for 10-20h, then heated to 100-150°C, held for 100-250h, and then re-pressed to obtain a pantograph carbon contact strip preform; the pore-forming agent is a linear material with a diameter of 0.1-0.3mm and a length of 50-100mm; at this time, the pore-forming agent takes 1-15% of a total weight of the carbon contact strip aggregate. Further, the pore-forming agent takes 5% of the total weight of the carbon contact strip aggregate. Further, a method of preparing the carbon contact strip aggregate is performed as follows: taking components of the following mass parts: pitch coke powder 60-70 parts, graphite powder 20-30 parts, high-temperature pitch 5-10 parts, and pore-forming agent having 1-15% of the total mass of the above three materials; then evenly mixing the pitch coke powder, the graphite powder and the pore-forming agent, then adding molten high-temperature pitch, then mixing for 2-4h at a temperature of 160-200°C, then cooling to room temperature, and grinding the mixture into powder of 200-300 meshes so as to obtain the carbon contact strip aggregate. Further, the pore-forming agent is methylcellulose or ammonium carbonate;
(2) sintering: under the condition of air isolation, sintering the pantograph carbon contact strip preform at a temperature of 1000-1200°C for a sintering time of 15-20h so as to obtain a semi-finished carbon contact strip; and
(3) graphitization: placing the semi-finished carbon contact strip into a graphitization furnace, heating to 2300-2500°C and holding for 2-4h;
(4) immersing: placing the semi-finished carbon contact strip into a calcinator, heating to 800-1300°C after vacuumization, heating a copper alloy and a brazing filler metal to a molten state at the same time, then pouring the molten copper alloy liquid into the calcinator to immerse the semi-finished carbon contact strip, next introducing a protective gas into the calcinator to a pressure of 3-8MPa, and applying a magnetic field of 3-14T at the same time and holding for 1-2h so as to complete immersion to obtain the high-conductivity pantograph carbon contact strip; wherein the brazing filler metal in the copper alloy liquid has a mass fraction of 1 %-1 0%.

Based on the above technical solution, the present may also be improved as below.

Further, the fiber in step (1) includes carbon fiber, metal fiber, and mineral fiber and so on.

Further, during the preform preparation process, based on a weight percentage, the content of the graphene is 2-35% and the content of the fiber is 3-65%.

Further, during the preform preparation process, a pre-cooling time of the metal base is 0.5-3h. a treatment time of the container holding the aqueous solution placed on the metal base is 1-5h, and a lyophizing time of the carbon framework is 2-8h.

Further, during the preform preparation process, the metal base may be made of stainless steel, and copper and so on, and an upper bottom surface of the metal base is larger than a bottom surface of the container holding the aqueous solution.

Further, the vacuum degree of the vacuumized calcinator in step (4) is 0.05-0.2Pa.

Further, the brazing filler metal may be a material that is well combined with copper and carbon at the same time, and the material may be, for example, iron, zirconium, and chromium and the like; the mass fraction of the brazing filler metal in the copper alloy liquid is 5-8%.

Further, the protective gas is nitrogen or argon.

Further, during the immersion, the pressure inside the calcinator is 5MPa and the externally-applied magnetic field strength is 8T.

Further, the magnetic field externally applied to the calcinator may be, for example, generated by a coil winding, the magnetic field strength may be controlled by a size of a coil current, and magnetic field directions may be generated by different coil windings during working.

Further, heating in step (3) is performed in two sections: a heating rate is 5°C/min before the semi-finished carbon contact strip reaches 1200°C; the heating rate is 30°C/h after the semi-finished carbon contact strip exceeds 1200°C.

The beneficial effects of the present disclosure are shown below.
1. The pantograph carbon contact strip preform with communication pores is obtained, and the internal pores are subsequently communicated; in the subsequent immersion, the copper metal immersion liquid is more uniformly distributed inside the carbon contact strip, thereby significantly improving the conductivity of the carbon contact strip.
   At step (a), the pantograph carbon contact strip preform is prepared using bionic technology of ice crystal growth so that communication pores are formed inside the preform with high open porosity; during the subsequent immersion, the copper metal immersion liquid may form a communicating copper network inside the carbon contact strip, thereby significantly improving the conductivity of the carbon contact strip.
2. A small amount of brazing filler metal (iron, chromium and the like) is molten-mixed with the copper metal, and the copper alloy liquid immerses the pantograph carbon contact strip preform with communication pores so that the copper, the brazing filler metal and the carbon are closely combined together during the immersion process, increasing an interface combination force of the copper and the carbon, and improving the immersion effect.
3. During the immersion process, a strong magnetic field may be externally applied to inhibit liquid-liquid separation of alloy and convectional effect of the conductive melt, so that copper-rich phase is more uniformly distributed, solute elements in alloy crystal tend to be uniformly distributed at the same time, and a fiber spacing in a solidification microstructure is reduced. Therefore, the metal-immersed carbon contact strip has stronger mechanical strength, better conductivity, better arc ablation resistance and longer service life.

### Brief description of the Drawings

FIG. 1 is a schematic diagram of forming pores by using ice crystal growth in a pantograph carbon contact strip preform according to an example of the present disclosure.
FIG. 2 is a schematic diagram of vacuumizing a furnace wall during a process of immersing a pantograph carbon contact strip preform in a copper-brazing-filler-metal mixture solution according to an example of the present disclosure.
FIG. 3 is a schematic diagram illustrating a process of immersing a pantograph carbon contact strip preform in a copper-brazing-filler-metal mixture solution according to an example of the present disclosure.
FIG. 4 is a schematic diagram of mutual combination of copper, brazing filler metal and carbon according to an example of the present disclosure.
FIG. 5 is a principle diagram of externally applying a magnetic field to a calcinator according to an example of the present disclosure.

Numerals of drawings are described as follows:
1 - calcinator, 2 -mechanical arm, 3- graphite crucible, 4-molten metal of copper and brazing filler metal, 5 - rotary rod, 6 - pantograph carbon contact strip, 7 - thermocouple, 8 - air outlet, 9 - sintering rod, 10 - conductive coil, 11 - cooling water system.

### Detailed Description of Embodiments

Specific examples of the present disclosure will be described below to help persons skilled in the art to understand the present disclosure. However, it is understood that the present disclosure is not limited to the examples of the present disclosure. It is apparent that changes made by those skilled in the art based on the concept of the present disclosure without departing from the spirits and scope of the present disclosure defined by appended claims shall all fall within the scope of protection of the present disclosure.

In order to solve low conductivity of an existing pantograph carbon contact strip, the present disclosure provides a method of preparing a high-conductivity pantograph carbon contact strip. For example, under the circumstances of the above (a), a pantograph carbon contact strip preform with communication pores is prepared by using bionic technology of ice crystal growth, then immersed in a metal liquid obtained by melting-mixing a small amount of brazing filler metal and a copper metal, and subjected to an external strong magnetic field during the immersion at the same time. Thus, mutually-communicated pores are formed inside the carbon contact strip, mutual wettability of the carbon phase and the copper phase is improved, and the uniformity of the copper metal liquid inside the pores of the carbon contact strip preform is increased. The high-conductivity pantograph carbon contact strip according to the present disclosure may be prepared in the following method.

### 1. Preparing a carbon contact strip preform

### (a)

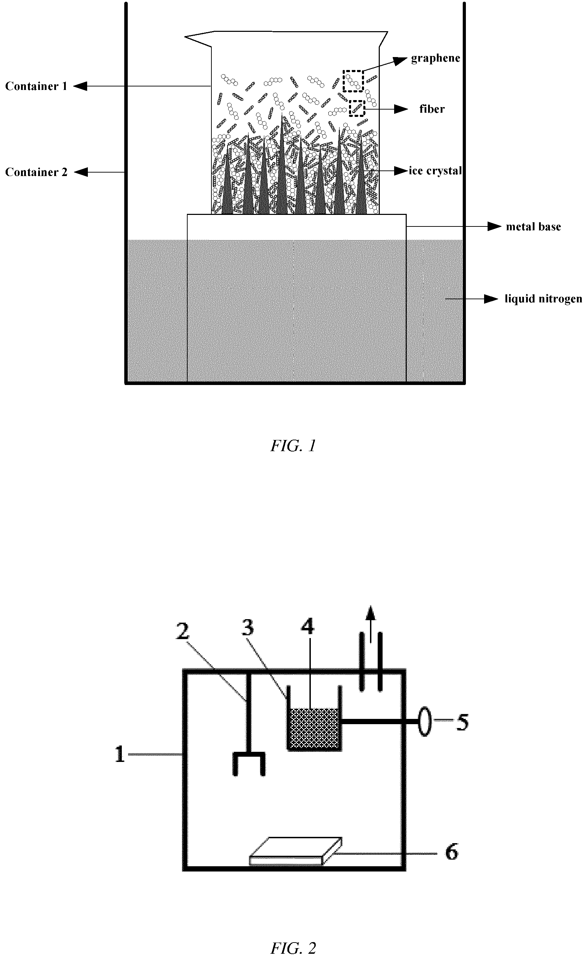

a) based on mass ratio, 2-35% graphene, 3-65% fiber (such as carbon fiber, metal fiber and mineral fiber) are added into water to prepare a homogeneous and stable aqueous solution;
b) a metal base is placed in a liquid nitrogen environment to be pre-cooled for 0.5-3h, a container holding the aqueous solution is placed on the metal base to be treated for 1-5h, wherein the aqueous solution performs ice crystal growth along a temperature gradient to force graphene and fiber to be arranged at a given orientation, embedded between ice crystal columns and gradually cured so as to obtain a carbon framework with a given shape as shown in FIG. 1;
c) the above carbon framework is lyophilized for 2-8h using a lyophilizer to realize ice crystal sublimation so as to obtain a pantograph carbon contact strip preform with communication pores;

### (b)

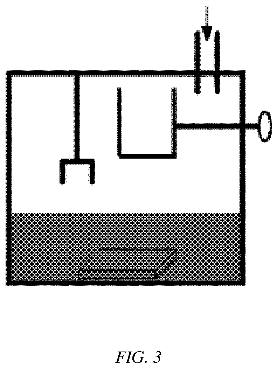

1. kneading: 60-70 mass parts of pitch coke powder, 20-30 mass parts of graphite powder, and 5-10 mass parts of high temperature pitch are taken as base materials; based on weight ratio, pitch coke powder with particle size of 100 meshes and graphite powder with particle size of 100 meshes are placed into a kneader, and pore-forming agent taking 1-15% of the total mass of the base materials is added to be fully mixed for 1h, wherein the pore-forming agent is easy to decompose into a gaseous linear material such as methylcellulose (vaporization temperature about 80°C) and ammonium carbonate (vaporization temperature about 70°C), and the pore-forming agent has a diameter of 0.1-0.3mm and a length of 50-100mm; then molten high temperature pitch is added to be mixed for 2-4h at a temperature of 160-200°C, and the mixture is cooled and then placed into a ball mill to perform grinding so as to obtain a carbon contact strip aggregate with particle size of 200-300 meshes;
2. pressing: the carbon contact strip aggregate is pre-pressed into a carbon-based column of 25mm*35mm*1200mm in a 200T hydraulic press, then the carbon-based column is heated to the vaporization temperature of the pore-forming agent and held for 10-20h, then heated again to 100-150°C and held for 100-250h, and then re-pressed so as to obtain a pantograph carbon contact strip preform with communication pores.
2. Sintering: the pantograph carbon contact strip preform 6 is placed into a sintering furnace, and heated under air isolation with a sintering temperature and a sintering time controlled respectively to 1000-1200°C and 15-20h, so as to obtain a semi-finished carbon contact strip.
3. Graphitization: the semi-finished carbon contact strip is placed into a high temperature graphitization furnace for graphitization treatment, that is, the semi-finished carbon carbon contract strip is placed into a protective medium inside the graphitization furnace and heated to a high temperature of 2300-2500°C, wherein during the heating process, a heating rate before reaching 1200°C is 5°C/min and the heating rate after exceeding 1200°C is 30°C/h; then the temperature of 2300-2500 °C is held for 2-4h, hexagonal carbon atom planar grids are transformed from disorderly overlap of a two-dimensional space to orderly overlap of three-dimensional space, and a graphite structure is formed in the semi-finished carbon contact strip;
4. Immersing
   a) the semi-finished carbon contact strip is placed into the cavity of the calcinator 1, the copper metal and the brazing filler metal (iron, titanium, zirconium and chromium and the like) well combined with copper and carbon simultaneously are evenly mixed and then placed into a graphite crucible 3 installed in the calcinator 1; wherein a mass fraction of the brazing filler metal in a copper-brazing-filler-metal melt 4 is 1-10%;
   b) the hearth of the calcinator 1 is vacuumized to about 0.1Pa; gas inside the hearth and the pores of the semi-finished carbon contact strip 6 is extracted at the same time, wherein the vacuumization is as shown in FIG. 2;
   c) the copper alloy and the brazing filler metal in the graphite crucible 3 are heated to a molten state, and the semi-finished carbon contact strip 6 is heated to 800-1300°C at the same time;
   d) the copper alloy liquid in the graphite crucible 3 is poured into the cavity of the calcinator by rotating a rotary rod 5, and a protective gas (such as nitrogen and argon and so on) is introduced into the hearth to a pressure of 3-8 MPa under the condition of 3-14T magnetic field to enable the copper alloy liquid to be gradually pressed into the pores of the preform, wherein temperature and pressure are held for 1-2h during the immersion process shown in FIG. 3;
   e) after the pores of the semi-finished carbon contact strip are filled up with the copper alloy liquid, pressure is released, the semi-finished carbon contact strip 6 is taken out of the copper alloy liquid by use of a mechanical arm 2, and cooled so as to complete the immersion process to obtain a pantograph carbon contact strip.

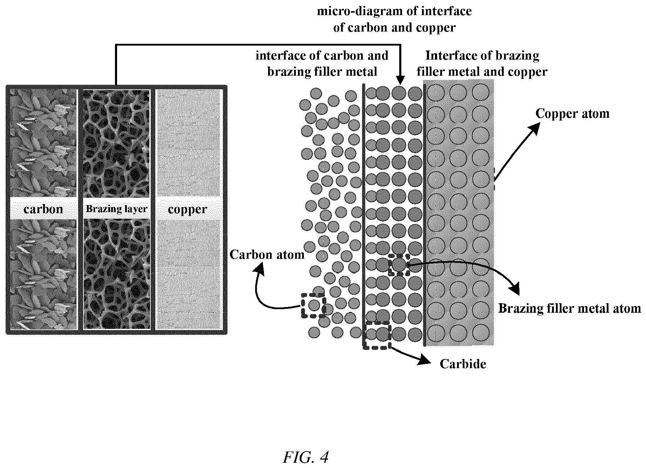

In the technical solution, when the carbon contact strip is immersed in the mixture solution of copper and brazing filler metal, a transitional layer will appear between copper and carbon. The transitional layer is mainly used to connect copper and carbon. As shown in FIG. 4, at the interface of carbon and copper, the brazing filler metal will chemically react with carbon at a high temperature to produce carbide. The carbide has good wettability with each of the brazing filler metal and the carbon, so that the carbon and the brazing filler metal are more closely combined. At the same time, metal atom in the brazing filler metal is similar in size to copper atom, and the brazing filler metal and copper can be more closely combined due to their large combination force. Thus, with the transition of the above brazing layer, the copper and the carbon that have poor mutual wettability can be more closely combined.

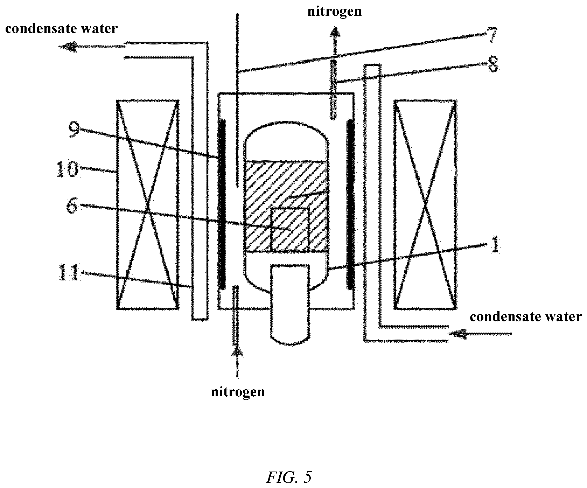

The immersion at step 4 is completed by a system of magnetic field and calcinator with its structure shown in FIG. 5. The system of magnetic field and calcinator is mainly composed of a magnetic field generator, a high-temperature sintering furnace and a temperature control system. The magnetic field generator includes but not limited to a conductive coil. When the conductive coil is a conductive coil 10, a strong direct current is introduced into the conductive coil 10 to generate a vertical static magnetic field with its maximum magnetic induction intensity reaching 12-18T, magnetic field homogeneity being between 0.02%-0.3% and excitation speed being 3~16T/30min. The high-temperature sintering furnace is installed in the cavity of a magnet with a heating temperature up to 1200°C. The heating temperature is measured by a type R thermocouple fixed inside the heating furnace, with the measuring accuracy being +5°C. The heating rate is 5K/min. A metal alloy specimen is placed in a high strength graphite crucible, a desired magnetic field condition may be controlled by adjusting a depth of its entering into the furnace, and the specimens are placed at Bmax (magnet center) and -B (dB/dz) max (100mm up the magnet center) respectively.

The method of the present disclosure is not only applicable to the pantograph carbon contact strip but also to all electrical carbon materials such as carbon brushes.

The specific implementations of the present disclosure will be detailed below in combination with examples.

### Example 1

A method of preparing a high-conductivity pantograph carbon contact strip includes the following steps.
1. preparing a carbon contact strip preform: based on mass ratio, 5% graphene and 28% carbon fiber were added into water to prepare a homogeneous and stable aqueous solution; a metal base was placed in a liquid nitrogen to perform pre-cooling for 0.5h, and a container holding the aqueous solution was placed on the metal base for treatment of 1.5h so as to obtain a carbon framework with a given shape; and then the obtained carbon framework was lyophilized using a lyophilizer for 2h to realize ice crystal sublimation so as to obtain a pantograph carbon contact strip preform with communication pores.
2. Sintering: the pantograph carbon contact strip preform was placed in a sintering furnace and heated under air isolation with a sintering temperature controlled to 1100°C and a sintering time controlled to 18h so as to obtain a semi-finished carbon contact strip.
3. Graphitization: the semi-finished carbon contact strip was placed into a protective medium in a graphitization furnace, then heated to 1200°C at a heating rate of 5°C/min, then heated to 2400°C at a heating rate of 30°C/h and held for 3h at this temperature, hexagonal carbon atom planar grids were transformed from disorderly overlap of a two-dimensional space to orderly overlap of a three-dimensional space, and a graphite structure was formed in the semi-finished carbon contact strip;
4. Immersing: the semi-finished carbon contact strip was placed into a calcinator, vacuumized to about 0.1Pa and then heated to about 1000 °C, a copper alloy and a brazing filler metal were heated to a molten state at the same time, then the molten copper alloy liquid was poured into the calcinator to immerse the semi-finished carbon contact strip, next nitrogen was introduced into the calcinator to a pressure of 5MPa, and a magnetic field of 8T was applied at the same time and held for 2h so as to complete immersion to obtain a pantograph carbon contact strip; wherein the copper alloy liquid contained an iron brazing filler with a mass fraction of 5%.

Through performance test, an open porosity of the obtained pantograph carbon contact strip preform is 35%, a volume density of the obtained pantograph carbon contact strip is 3.2g/cm3, a compressive strength is 336MPa, a bending strength is 115MPa, and a resistivity is 0.85µΩm. The performance of the carbon contact strip is greatly improved compared with current commercial metal-immersed contact strips.

In addition, the above step [1. Preparing a carbon contact strip preform] may achieve a better effect after being changed in the following example.
1. Kneading: 65 mass parts of pitch coke powder, 25 mass parts of graphite powder and 8 mass parts of high temperature pitch were taken as base materials; based on weight ratio, the pitch coke powder and the graphite powder were placed into a kneader and added with methylcellulose taking 5% of the total mass of the base materials and then fully mixed for 1h, where the methylcellulose has a diameter of 0.2mm and a length of 70mm; then molten high temperature pitch was added to be evenly mixed, then cooled and placed into a ball mill to perform grinding so as to obtain a carbon contact strip aggregate with particle size of about 250 meshes.
2. Pressing: the carbon contact strip aggregate was pre-pressed into a carbon-based column of 25mm*35mm*1200mm in a 200T hydraulic press, the carbon-based column was then heated to about 80°C and held for 15h, then heated again to 120°C and held for 200h, and then re-pressed so as to obtain the pantograph carbon contact strip preform with communication pores.

### Example 2

A method of preparing a high-conductivity pantograph carbon contact strip includes the following steps.
1. preparing a carbon contact strip preform: based on mass ratio, 12% graphene and 35% carbon fiber were added into water to prepare a homogeneous and stable aqueous solution; a metal base was placed in a liquid nitrogen to perform pre-cooling for 1.5h, and a container holding the aqueous solution was placed on the metal base for treatment of 2.5h so as to obtain a carbon framework with a given shape; and then the obtained carbon framework was lyophilized using a lyophilizer for 3h to realize ice crystal sublimation so as to obtain a pantograph carbon contact strip preform with communication pores.
2. Sintering: the pantograph carbon contact strip preform was placed in a sintering furnace and heated under air isolation with a sintering temperature controlled to 1200°C and a sintering time controlled to 15h so as to obtain a semi-finished carbon contact strip.
3. Graphitization: the semi-finished carbon contact strip was placed into a protective medium in a graphitization furnace, then heated to 1200°C at a heating rate of 5°C/min, then heated to 2500°C at a heating rate of 30°C/h and held for 2h at this temperature, hexagonal carbon atom planar grids were transformed from disorderly overlap of a two-dimensional space to orderly overlap of a three-dimensional space, and a graphite structure was formed in the semi-finished carbon contact strip;
4. Immersing: the semi-finished carbon contact strip was placed into a calcinator, vacuumized to about 0.1Pa and then heated to about 1300°C, a copper alloy and a brazing filler metal were heated to a molten state at the same time, then the molten copper alloy liquid was poured into the calcinator to immerse the semi-finished carbon contact strip, next nitrogen was introduced into the calcinator to a pressure of 3MPa, and a magnetic field of 14T was applied at the same time and held for 2h so as to complete immersion to obtain a pantograph carbon contact strip; wherein the copper alloy liquid contained a titanium brazing filler with a mass fraction of 8%.

Through performance test, an open porosity of the obtained pantograph carbon contact strip preform is 38%, a volume density of the obtained pantograph carbon contact strip is 3.25g/cm3, a compressive strength is 352MPa, a bending strength is 124MPa, and a resistivity is 0.72µΩm.

In addition, the above step [1. Preparing a carbon contact strip preform] may achieve a better effect after being changed in the following example.
1. Kneading: 70 mass parts of pitch coke powder, 20 mass parts of graphite powder and 10 mass parts of high temperature pitch were taken as base materials; based on weight ratio, the pitch coke powder and the graphite powder which had different particle sizes were placed into a kneader and added with ammonium carbonate taking 15% of the total mass of the base materials and then fully mixed for 1h, where the ammonium carbonate has a diameter of 0.1mm and a length of 50mm; then molten high temperature pitch was added to be evenly mixed, then cooled and placed into a ball mill to perform grinding so as to obtain a carbon contact strip aggregate with particle size of about 200 meshes.
2. Pressing: the carbon contact strip aggregate was pre-pressed into a carbon-based column of 25mm*35mm*1200mm in a 200T hydraulic press, the carbon-based column was then heated to about 70°C and held for 20h, then heated again to 150°C and held for 150h, and then re-pressed so as to obtain the pantograph carbon contact strip preform with communication pores.

### Example 3

A method of preparing a high-conductivity pantograph carbon contact strip includes the following steps.
1. preparing a carbon contact strip preform: based on mass ratio, 24% graphene and 45% metal fiber were added into water to prepare a homogeneous and stable aqueous solution; a metal base was placed in a liquid nitrogen to perform pre-cooling for 2h, and a container holding the aqueous solution was placed on the metal base for treatment of 3h so as to obtain a carbon framework with a given shape; and then the obtained carbon framework was lyophilized using a lyophilizer for 6.5h to realize ice crystal sublimation so as to obtain a pantograph carbon contact strip preform with communication pores.
2. Sintering: the pantograph carbon contact strip preform was placed in a sintering furnace and heated under air isolation with a sintering temperature controlled to 1000°C and a sintering time controlled to 20h so as to obtain a semi-finished carbon contact strip.
3. Graphitization: the semi-finished carbon contact strip was placed into a protective medium in a graphitization furnace, then heated to 1200°C at a heating rate of 5°C/min, then heated to 2300°C at a heating rate of 30°C/h and held for 4h at this temperature, hexagonal carbon atom planar grids were transformed from disorderly overlap of a two-dimensional space to orderly overlap of a three-dimensional space, and a graphite structure was formed in the semi-finished carbon contact strip;
4. Immersing: the semi-finished carbon contact strip was placed into a calcinator, vacuumized to about 0.1Pa and then heated to about 800°C, a copper alloy and a brazing filler metal were heated to a molten state at the same time, then the molten copper alloy liquid was poured into the calcinator to immerse the semi-finished carbon contact strip, next nitrogen was introduced into the calcinator to a pressure of 8MPa, and a magnetic field of 5T was applied at the same time and held for 2h so as to complete immersion to obtain a pantograph carbon contact strip; wherein the copper alloy liquid contained a zirconium brazing filler with a mass fraction of 6%.

Through performance test, an open porosity of the pantograph carbon contact strip preform obtained through ice crystal growth is 43%, a volume density of the obtained pantograph carbon contact strip is 3.15g/cm3, a compressive strength is 345MPa, a bending strength is 132MPa, and a resistivity is 0.64µΩm.

In addition, the above step [1. Preparing a carbon contact strip preform] may achieve a better effect after being changed in the following example.
1. Kneading: 60 mass parts of pitch coke powder, 30 mass parts of graphite powder and 5 mass parts of high temperature pitch were taken as base materials; based on weight ratio, the pitch coke powder and the graphite powder which had different particle sizes were placed into a kneader and added with methylcellulose taking 3% of the total mass of the base materials and then fully mixed for 1h, where the methylcellulose has a diameter of 0.3mm and a length of 100mm; then molten high temperature pitch was added, mixed for 4h at 160°C, then cooled and placed into a ball mill to perform grinding so as to obtain a carbon contact strip aggregate with particle size of about 300 meshes.
2. Pressing: the carbon contact strip aggregate was pre-pressed into a carbon-based column of 25mm*35mm*1200mm in a 200T hydraulic press, the carbon-based column was then heated to about 85°C and held for 10h, then heated again to 100°C and held for 250h, and then re-pressed so as to obtain the pantograph carbon contact strip preform with communication pores.

Although the specific implementations of the present disclosure are described in detail in combination with specific examples, the specific examples shall not be understood as limiting the scope of protection of the present disclosure.

## Claims

1. A method of preparing a high-conductivity pantograph carbon contact strip, comprising steps of:
(1) preparing a preform: obtaining a pantograph carbon contact strip preform with communication pores;
(2) sintering: under the condition of air isolation, sintering the pantograph carbon contact strip preform at a temperature of 1000-1200°C for a sintering time of 15-20h so as to obtain a semi-finished carbon contact strip; and
(3) graphitization: placing the semi-finished carbon contact strip into a graphitization furnace, heating to 2300-2500°C and holding for 2-4h;
(4) immersing: placing the semi-finished carbon contact strip into a calcinator, heating to 800-1300°C after vacuumization, heating a copper alloy and a brazing filler metal to a molten state at the same time, then pouring the molten copper alloy liquid into the calcinator to immerse the semi-finished carbon contact strip, next introducing a protective gas into the calcinator to a pressure of 3-8MPa, and applying a magnetic field of 3-14T at the same time and holding for 1-2h so as to complete immersion to obtain the high-conductivity pantograph carbon contact strip; wherein the copper alloy liquid contains the brazing filler metal with a mass fraction of 1%-10%,
wherein at the step of preparing the preform, a given amount of graphene and fiber is added into water to prepare a homogeneous and stable aqueous solution, then a metal base is pre-cooled in liquid nitrogen for a period of time, a container holding the aqueous solution is placed on the metal base for a period of time, the aqueous solution in the container performs ice crystal growth along a temperature gradient to force graphene and fiber to be arranged at a given orientation, embedded between ice crystal columns and gradually cured so as to obtain a carbon framework with a given shape, and then the carbon framework is lyophilized using a lyophilizer for a period of time to realize ice crystal sublimation so as to obtain the pantograph carbon contact strip preform with communication pores.

2. The method according to claim 1, wherein during the preform preparation process, a pre-cooling time of the metal base is 0.5-3h, a treatment time of the container holding the aqueous solution placed on the metal base is 1-5h, and a lyophilizing time of the carbon framework is 2-8h.

3. The method according to claim 1, wherein during the preform preparation process, based on weight percentage, the content of the graphene is 2-35%, and the content of the fiber is 3-65%.

4. The method according to claim 1, wherein during the preform preparation process, the fiber comprises carbon fiber, metal fiber and mineral fiber.

5. The method according to claim 1, wherein the metal base is made of a high conductivity material such as stainless steel and copper, and an upper bottom surface of the metal base is larger than a bottom surface of the container holding the aqueous solution.

6. The method according to claim 1, wherein a vacuum degree of the vacuumized calcinator at step (4) is 0.05-0.2Pa.

7. The method according to claim 1, wherein the brazing filler metal is iron, zirconium or chromium, and has a mass fraction of 5-8% in the copper alloy liquid.

8. The method according to claim 1, wherein in the immersion process, the protective gas is nitrogen or argon, a pressure inside the calcinator is 5MPa and externally-applied magnetic field intensity is 8T.

9. The method according to claim 1, wherein heating at step (3) is performed in two sections: a heating rate is 5°C/min before the semi-finished carbon contact strip reaches 1200°C, and a heating rate is 30°C/h after the semi-finished carbon contact strip exceeds1200°C.

## Patentansprüche

1. Verfahren zur Herstellung eines hochleitfähigen Stromabnehmerkontaktstreifens aus Kohlenstoff, umfassend die folgenden Schritte:
(1) Zubereiten einer Vorform: Erhalten einer Vorform eines Stromabnehmerkontaktstreifens aus Kohlenstoff mit Kommunikationsporen;
(2) Sintern: Unter der Bedingung der Luftisolierung, Sintern der Vorform des Stromabnehmerkontaktstreifens aus Kohlenstoff bei einer Temperatur von 1000-1200 °C für eine Sinterzeit von 15-20 Std., um einen halbfertigen Kohlenstoffkontaktstreifen zu erhalten; und
(3) Graphitierung: Platzieren des halbfertigen Kohlenstoffkontaktstreifens in einem Graphitierungsofen, Erhitzen auf 2300-2500 °C und Halten für 2-4 Std;
(4) Eintauchen: Platzieren des halbfertigen Stromabnehmerkontaktstreifens aus Kohlenstoff in einem Kalzinator, Erhitzen auf 800-1300 °C nach der Vakuumisierung, gleichzeitiges Erhitzen einer Kupferlegierung und eines Hartlots bis zu einem geschmolzenen Zustand, dann Gießen der geschmolzenen Kupferlegierungsflüssigkeit in den Kalzinator, um den halbfertigen Stromabnehmerkontaktstreifen aus Kohlenstoff einzutauchen, anschließendes Einführen eines Schutzgases in den Kalzinator mit einem Druck von 3-8 MPa und gleichzeitiges Anwenden eines Magnetfelds von 3-14 T und Halten für 1-2 Std., um das Eintauchen abzuschließen, um den Stromabnehmerkontaktstreifen aus Kohlenstoff mit hoher Leitfähigkeit zu erhalten; wobei die Kupferlegierungsflüssigkeit das Hartlötmittel mit einem Massenanteil von 1 %-10 % enthält,
wobei bei dem Schritt des Vorbereitens der Vorform eine gegebene Menge an Graphen und Fasern in Wasser zugegeben wird, um eine homogene und stabile wässrige Lösung vorzubereiten, dann eine Metallbasis für eine Zeitspanne in flüssigem Stickstoff vorgekühlt wird, ein Behälter, der die wässrige Lösung enthält, für eine Zeitspanne auf die Metallbasis gestellt wird, die wässrige Lösung in dem Behälter ein Eiskristallwachstum entlang eines Temperaturgradienten durchführt, um Graphen und Fasern zu zwingen, in einer gegebenen Orientierung angeordnet zu werden, zwischen Eiskristallsäulen eingebettet zu werden und allmählich auszuhärten, um ein Kohlenstoffgestell mit einer gegebenen Form zu erhalten, und dann das Kohlenstoffgestell unter Verwendung eines Gefriertrockners für eine Zeitspanne gefriergetrocknet wird, um eine Eiskristallsublimation zu realisieren, um die Vorform des Stromabnehmerkontaktstreifens aus Kohlenstoff mit Kommunikationsporen zu erhalten.

2. Verfahren nach Anspruch 1, wobei während des Prozesses zur Herstellung der Vorform eine Vorkühlzeit der Metallbasis 0,5-3 Std., eine Behandlungszeit des Behälters mit der wässrigen Lösung, der auf die Metallbasis gestellt wird, 1-5 Std. und eine Gefriertrocknungszeit des Kohlenstoffgestells 2-8 Std. beträgt.

3. Verfahren nach Anspruch 1, wobei während des Prozesses zur Herstellung der Vorform, basierend auf Gewichtsprozent, der Gehalt an Graphen 2-35 % und der Gehalt an Fasern 3-65 % beträgt.

4. Verfahren nach Anspruch 1, wobei die Faser während des Prozesses zur Herstellung der Vorform Kohlenstofffaser, Metallfaser und Mineralfaser umfasst.

5. Verfahren nach Anspruch 1, wobei die Metallbasis aus einem Material mit hoher Leitfähigkeit, wie beispielsweise rostfreiem Stahl und Kupfer, hergestellt ist und eine obere Oberfläche der Metallbasis größer ist als eine untere Oberfläche des Behälters, der die wässrige Lösung enthält.

6. Verfahren nach Anspruch 1, wobei der Vakuumgrad des vakuumierten Kalzinators in Schritt (4) 0,05-0,2 Pa beträgt.

7. Verfahren nach Anspruch 1, wobei das Hartlot Eisen, Zirkonium oder Chrom ist und einen Massenanteil von 5-8 % in der Kupferlegierungsflüssigkeit aufweist.

8. Verfahren nach Anspruch 1, wobei bei dem Immersionsprozess das Schutzgas Stickstoff oder Argon ist, der Druck im Inneren des Kalzinators 5 MPa beträgt und die von außen angelegte Magnetfeldstärke 8 T beträgt.

9. Verfahren nach Anspruch 1, wobei die Erwärmung in Schritt (3) in zwei Abschnitten erfolgt: eine Erwärmungsrate von 5 °C/Min., bevor der halbfertige Kohlenstoffkontaktstreifen 1200 °C erreicht, und eine Erwärmungsrate von 30 °C/Std., nachdem der halbfertige Kohlenstoffkontaktstreifen 1200 °C überschritten hat.

## Revendications

1. Procédé de préparation d'une bande de contact en carbone à haute conductivité pour pantographe, comprenant les étapes consistant à :
(1) préparer une préforme : obtention d'une préforme de bande de contact en carbone pour pantographe avec des pores de communication ;
(2) fritter : dans la condition d'isolement de l'air, frittage de la bande de contact en carbone pour pantographe à une température de 1 000 à 1 200 °C pendant une durée de frittage de 15 à 20 heures pour obtenir une bande de contact en carbone semi-finie ; et
(3) graphitiser : placement de la bande de contact en carbone semi-finie dans un four de graphitisation, chauffage à 2 300 à 2 500 °C et maintien pendant 2 à 4 h ;
(4) immerger : placement de la bande de contact en carbone semi-finie dans un calcinateur, chauffage à 800 à 1 300 °C après mise sous vide, chauffage d'un alliage de cuivre et d'un métal d'apport de brasage à un état fondu en même temps, puis versement du liquide d'alliage de cuivre fondu dans le calcinateur pour immerger la bande de contact de carbone semi-finie, puis introduction d'un gaz protecteur dans le calcinateur à une pression de 3 à 8 MPa, et application d'un champ magnétique de 3 à 14 T en même temps et maintien pendant 1 à 2 heures pour compléter l'immersion pour obtenir une bande de contact en carbone haute conductivité pour pantographe ; dans lequel le liquide d'alliage de cuivre contient le métal d'apport de brasage avec une fraction en masse de 1 % à 10 %,
dans lequel à l'étape de préparation de la préforme, une quantité donnée de graphène et de fibre est ajoutée dans l'eau pour préparer une solution aqueuse stable et homogène, puis une base métallique est préchauffée dans de l'azote liquide pendant une période de temps, un récipient contenant la solution aqueuse est placé sur la base métallique pendant une période de temps, la solution aqueuse dans le récipient réalise une croissance des cristaux de glace le long d'un gradient de température pour forcer l'agencement du graphène et de la fibre à une orientation donnée, leur intégration entre des colonnes de cristaux de glace et leur durcissement progressif pour obtenir une structure de carbone ayant une forme donnée, puis la structure de carbone est lyophilisée en utilisant un lyophilisateur pendant une période de temps pour réaliser une sublimation des cristaux de glace pour obtenir la préforme de bande de contact en carbone pour pantographe avec des pores de communication.

2. Procédé selon la revendication 1, dans lequel durant le processus de préparation de préforme, une durée de pré-refroidissement de la base métallique est de 0,5 à 3 h, une durée de traitement du récipient contenant la solution aqueuse placée sur la base métallique est de 1 à 5 h, et une durée de lyophilisation de la structure de carbone est de 2 à 8 heures.

3. Procédé selon la revendication 1, dans lequel durant le processus de préparation de préforme, sur la base du pourcentage en poids, la teneur en graphène est de 2 à 35 %, et la teneur en fibre est de 3 à 65 % en poids.

4. Procédé selon la revendication 1, dans lequel durant le processus de préparation de préforme, la fibre comprend une fibre de carbone, une fibre métallique et une fibre minérale.

5. Procédé selon la revendication 1, dans lequel la base métallique est constituée d'un matériau à conductivité élevée tel que l'acier inoxydable et le cuivre, et une surface de fond supérieure de la base métallique est plus grande qu'une surface de fond du récipient contenant la solution aqueuse.

6. Procédé selon la revendication 1, dans lequel un degré de vide du calcinateur sous vide à l'étape (4) est de 0,05 à 0,2 Pa.

7. Procédé selon la revendication 1, dans lequel le métal d'apport de brassage est le fer, le zirconium ou le chrome, et a une fraction en masse de 5 à 8 % dans le liquide d'alliage de cuivre.

8. Procédé selon la revendication 1, dans lequel dans le processus d'immersion, le gaz protecteur est l'azote ou l'argon, une pression à l'intérieur du calcinateur est de 5 MPa et une intensité de champ magnétique appliqué par l'extérieur est de 8 T.

9. Procédé selon la revendication 1, dans lequel le chauffage à l'étape (3) est réalisé dans deux sections : une vitesse de chauffage est de 5 °C/min avant que la bande de contact en carbone semi-finie n'atteigne 1 200 °C, et une vitesse de chauffage est de 30 °C/h une fois que la bande de contact en carbone semi-finie dépasse 1 200 °C.
